# EUROPÄISCHE PATENTANMELDUNG

(11) **EP 3 296 796 A2**
(43) Veröffentlichungstag der Anmeldung: **21.03.2018**
(21) Anmeldenummer: 17195001.7
(22) Anmeldetag: 08.09.2006
(51) Int. Cl.: G02B 27/01, B60R 1/00, B60K 35/00

(54) **FAHRERASSISTENZVORRICHTUNG FÜR EIN FAHRZEUG UND VERFAHREN ZUR SICHTBARMACHUNG DER UMGEBUNG EINES FAHRZEUGES**

(30) Priorität: 08.09.2005 DE 102005042913; 08.09.2005 DE 102005042912
(62) Teilanmeldung aus: 06791938.1
(71) Anmelder: Johnson Controls GmbH, 51399 Burscheid (DE)
(72) Erfinder: KIRSCH, Oliver, 42111 Wuppertal (DE); SCHLIEP, Frank, 51375 Leverkusen (DE)
(74) Vertreter: Schwöbel, Thilo K.

(57) **Zusammenfassung**

Es wird eine Fahrerassistenzvorrichtung für ein Fahrzeug und ein Verfahren zur Sichtbarmachung der Umgebung eines Fahrzeugs vorgeschlagen, wobei der Fahrerassistenzvorrichtung zwei Sensoren zur Sensierung der Umgebung des Fahrzeugs zugeordnet sind, wobei die Sensoren eine unterschiedliche Auflösung aufweisen bzw. wobei der Fahrerassistenzvorrichtung eine Anzeigeeinrichtung zugeordnet ist, wobei die Anzeigeeinrichtung im Bereich der Frontscheibe zur eingeschränkt kontaktanalogen Anzeige einer Aufmerksamkeitsinformation vorgesehen ist.

## Beschreibung

Die vorliegende Erfindung betrifft eine Fahrerassistenzvorrichtung für ein Fahrzeug. Solche Fahrerassistenzvorrichtungen sind allgemein bekannt. Beispielsweise ist aus der deutschen Offenlegungsschrift DE 100 16 184 A1 eine Vorrichtung zur Anzeige der Umgebung eines Fahrzeuges bekannt, bei der Bilddaten auf eine als Bildschirm fungierende Windschutzscheibe projiziert werden. Bei einem solchen System ist nachteilig, dass eine sogenannte vollständig kontaktanaloge Darstellung auf der Windschutzscheibe bzw. auf der Frontscheibe entweder extrem aufwendig und daher kostenintensiv ist oder aber nicht in allen Bereichen mit einer 1:1-Überlagerung von Kamerabild und realer Welt auf der Windschutzscheibe erfolgt. Weiterhin ist beispielsweise aus der deutschen Offenlegungsschrift DE 102 18 175A1 eine Vorrichtung zur Anzeige der Umgebung eines Fahrzeuges bekannt, bei der zwei Sensoren vorgesehen sind, deren Bilddaten zur Anzeige für den Fahrer fusioniert werden. Hierbei ist es nachteilig, dass Sensoren bzw. Kameras, die zum einen eine vergleichsweise hohe Auflösung (vergleichbar derjenigen Auflösung, die für Kameras oder Sensoren üblich ist, die für Licht im sichtbaren Bereich des Spektrums empfindlich sind) insbesondere im (fernen) Infrarotbereich des Spektrums empfindlich sind, sehr kostenintensiv sind.

Aufgabe der vorliegenden Erfindung ist es, eine Fahrerassistenzvorrichtung für ein Fahrzeug zu schaffen, bei der mit einfachen und kostengünstig bereitstellbaren Mitteln die Funktion erzielbar ist, dass dem Fahrer effizient und mit möglichst geringer Informationsüberflutung ein Hinweis auf die wichtigen und sicherheitskritischen Informationen im Umfeld des Fahrzeugs gegeben wird.

Die Aufgabe wird gemäß einer ersten Ausführungsform der Erfindung von einer Fahrerassistenzvorrichtung für ein Fahrzeug gelöst, wobei der Fahrerassistenzvorrichtung zwei Sensoren zur Sensierung der Umgebung des Fahrzeugs zugeordnet sind, wobei die Sensoren eine unterschiedliche Auflösung aufweisen. Hierdurch ist es erfindungsgemäß vorteilhaft möglich, dass eine erheblich bessere Funktionsweise der Fahrerassistenzvorrichtung durch die Auswertung von zwei Sensoren ermöglicht wird. Die erfindungsgemäße Fahrerassistenzvorrichtung gemäß der ersten Ausführungsform ist darüber hinaus auch noch vergleichsweise kostengünstig herstellbar, weil die Auflösung eines der Sensoren vergleichsweise gering gewählt werden kann. Bevorzugt sind die wenigstens zwei Sensoren zur Sensierung in unterschiedlichen Spektralbereichen vorgesehen, so dass es erfindungsgemäß vorteilhaft möglich ist, mehr in der Umgebung des Fahrzeugs eigentlich vorhandene Informationen auszuwerten, um so zu eine genaueren Informationsgrundlage entweder zur Auswertung durch die Fahrerassistenzvorrichtung oder aber zur Information des Fahrers zu gelangen. Bevorzugt ist insbesondere, dass der erste Sensor zur Sensierung im Bereich des sichtbaren Lichts vorgesehen ist und dass der zweite Sensor zur Sensierung im Bereich des infraroten Lichts, bevorzugt im Bereich des fernen Infrarotbereich (FIR, far infrared), vorgesehen ist. Alternativ dazu ist es selbstverständlich möglich, dass der zweite Sensor im nahen infraroten Bereich oder auch sowohl im nahen als auch im fernen infraroten Bereich empfindlich ist. Weiterhin alternativ dazu ist es möglich, dass der erste Sensor sowohl im sichtbaren Bereich des Spektrums als auch im nahen infraroten Bereich empfindlich ist. Es ist auf diese Weise auch möglich, dass es einen gewissen Überlappungsbereich der sensierten Spektralbereiche der beiden Sensoren gibt. Erfindungsgemäß ist jedoch auch möglich, dass sich die detektierten Spektralbereiche nicht überlappen. Vorteilhaft an einer mittels der wenigstens zwei Sensoren möglichen gleichzeitigen Sensierung im sichtbaren und im infraroten Spektralbereich ist es, dass es dadurch möglich ist, eine erheblich größere Menge an Information der Fahrerassistenzvorrichtung bzw. dem Fahrer zugänglich zu machen, was nicht zuletzt die Sicherheit für Insassen des Fahrzeugs als auch für andere Verkehrsteilnehmer erhöht. Mittels der erfindungsgemäßen Maßnahmen gemäß der ersten Ausführungsform ist es vorteilhaft möglich, dass eine besondere genaue und alle möglichen Informationskanäle bzw. Spektralbereiche berücksichtigende Sensierung erfolgt. Ganz besonders bevorzugt ist der Einsatz der Fahrerassistenzvorrichtung bei Nacht, wo die Auswertung von Infrarotsignalen, etwa ausgesandt von neben der Fahrbahn sich bewegenden Fußgängern oder auch von Tieren, einen besonderen Gewinn an für den Fahrer in einer normalen Situation ohne Fahrerassistenzvorrichtung nicht zugänglichen Information bedeutet.

Bevorzugt ist insbesondere gemäß der ersten Ausführungsform, dass der zweite Sensor eine geringere Auflösung aufweist als der erste Sensor. Hierdurch ist der zweite Sensor besonders kostengünstig herstellbar.

Erfindungsgemäß ist gemäß der ersten Ausführungsform ferner bevorzugt, dass der Fahrerassistenzvorrichtung eine Anzeigeeinrichtung zugeordnet ist. Hierdurch ist es mit einfachen Mitteln möglich, die über die Sensoren gewonnene Information für einen Fahrer zugänglich darzustellen. Hierbei kann die Anzeigeeinrichtung erfindungsgemäß im Bereich der Frontscheibe und/oder im Bereich des Cockpits des Fahrzeugs und/oder im Bereich der Mittelkonsole des Fahrzeugs vorgesehen sein. Wenn die Anzeige an mehreren Stellen vorgesehen ist, handelt es sich selbstverständlich insbesondere um zwei verschiedene Anzeigeeinrichtungen, wobei jedoch in diesem Fall die Fahrerassistenzvorrichtung Informationen für beide diese Anzeigeeinrichtungen liefert. Durch die Wahl dieser erfindungsgemäß bevorzugten Orte für die Anzeigeeinrichtung ist es besonders effizient möglich, den Fahrer oder generell einen Benutzer der Fahrerassistenzvorrichtung über kritische Fahrzustände oder Situationen zu informieren. Im Bereich der Frontscheibe ist die Anzeigeeinrichtung bevorzugt als eine Kopf-hoch-Anzeige (Head-up-Display) vorgesehen. Hierdurch kann der Fahrer vorteilhafterweise ohne Kopfdrehung und Abwendung seiner Aufmerksamkeit vom Verkehrsgeschehen informiert werden. Hierdurch ist es in besonderer Weise vorteilhaft möglich, dass die Aufmerksamkeit des Fahrers in die richtige Richtung gelenkt wird. Hierdurch kann weiterhin vorteilhaft eine Projektion der darzustellenden Information in den Bereich der Frontscheibe bzw. in einen Bereich vom Fahrer aus gesehen hinter der Frontscheibe (virtuelles Bild) möglich werden, so dass besonders genau lokalisiert die darzustellende Information darstellbar ist.

Erfindungsgemäß ist gemäß der ersten Ausführungsform ferner bevorzugt, dass die Anzeigeeinrichtung zur Anzeige einer Aufmerksamkeitsinformation und/oder zur Anzeige einer bildlichen Darstellung zumindest eines Teils der Umgebung des Fahrzeugs vorgesehen ist. Unter einer Aufmerksamkeitsinformation wird im Rahmen der vorliegenden Erfindung eine Darstellung verstanden, welche keine Bildinformationen im Sinne eines realen, beispielsweise von einer Kamera aufgenommenen, Bildes ist. Bei einer Aufmerksamkeitsinformation im Sinne der vorliegenden Erfindung kann es sich beispielsweise um eine Leuchtmarkierung, ein Leuchtpunkt bzw. ein Leuchtbalken oder auch eine cartoonartige Darstellung handeln. Unter einer bildlichen Darstellung wird im Rahmen der vorliegenden Erfindung eine Darstellung verstanden, welche die Bildinformation im wesentlichen in der Form, wie sie von einer Kamera oder einem Sensor aufgenommen wird, darstellen, d.h. etwa mit verschiedenen, von den Sensoren bzw. Kameras detektierten Intensitätswerten innerhalb des Bildes. Hierbei kann die bildliche Darstellung und die Aufmerksamkeitsinformation beispielsweise überlagert dargestellt werden. Durch die Anzeige der Aufmerksamkeitsinformation bzw. der bildlichen Darstellung ist es vorteilhaft möglich, dass die Information besonders genau dargestellt werden kann. Insbesondere ist es vorteilhaft möglich, dass bei einer Falschfarbendarstellung insbesondere des vom zweiten Sensor (bzw. Kamera) ausgehenden Infrarotsensor-Signals eine bunte (also farbige) Darstellung der Anzeige der Sensorsignale erfolgt.

Ferner ist bevorzugt, dass die Aufmerksamkeitsinformation eine in den Bereich der Frontscheibe projizierte Darstellung ist, insbesondere eine Leuchtmarkierung und/oder eine cartoonartige Darstellung. Dies hat den Vorteil, dass dadurch in besonders augenfälliger und für den Fahrer erkennbaren Weise eine Informationsdarstellung möglich ist, so dass trotz beispielsweise einer Darstellung auf der Frontscheibe des Fahrzeugs keine Informationsüberflutung des Fahrers erfolgt, weil es sich bei der projizierten Darstellung nicht um eine realistische Wiedergabe bzw. ein realistisches Bild des Objekts handelt, dessen Vorhandensein bzw. dessen sicherheitskritische Entfernung zum Fahrzeug mittels der Aufmerksamkeitsinformation dargestellt werden soll.

Weiterhin ist vorteilhaft, dass zur Extraktion der Aufmerksamkeitsinformation eine Verarbeitung von von einem Sensor der wenigstens zwei Sensoren gelieferten Daten vorgesehen ist oder dass zur Extraktion der Aufmerksamkeitsinformation eine Fusionierung von von den wenigstens zwei Sensoren gelieferten Daten vorgesehen ist. Hierbei ist es erfindungsgemäß vorgesehen dass ein Erkennungsschritt bzw. ein Verarbeitungsschritt durchgeführt wird, bei dem die von den Sensoren bzw. den Kameras aufgenommenen Informationen interpretiert bzw. bewertet werden.

Erfindungsgemäß ist ferner bevorzugt, dass die Aufmerksamkeitsinformation eine Entfernungsinformation umfasst bzw. dass die Aufmerksamkeitsinformation eine Leuchtmarkierung im Umfangsbereich der Frontscheibe ist. Hierdurch ist es möglich, dass dem Fahrer weitere wichtige und gegebenenfalls sicherheitsrelevante Informationen, insbesondere in Bezug auf die Entfernung von Objekten, zur Verfügung gestellt werden und weiterhin ist es vorteilhaft möglich, dass in besonders einfacher Weise und besonders kostengünstig eine Anzeigeeinrichtung realisierbar, wobei insbesondere der Randbereich der Darstellung bzw. der Randbereich der Frontscheibe, welche einer besonderen Aufmerksamkeit des Fahrers bedarf, besonders markiert wird.

Erfindungsgemäß ist weiterhin bevorzugt, dass die Darstellung der Aufmerksamkeitsinformation im Bereich der Frontscheibe eingeschränkt kontaktanalog vorgesehen ist. Im Rahmen der vorliegenden Erfindung bedeutet der Begriff der kontaktanalogen Anzeige, dass eine Korrelation vorliegt, zwischen dem Ort der Anzeige und dem Ort auf der Windschutzscheibe bzw. der Frontscheibe, an welchem ein Fahrer des Fahrzeugs einen Bildausschnitt der Umgebung des Fahrzeugs sehen würde. Eine solche Aufmerksamkeitsinformation wird bei einer Darstellung im Bereich der Frontscheibe erfindungsgemäß in eingeschränkt kontaktanaloger Anzeige angezeigt. Dies bedeutet, dass eine gewisse räumliche Korrelation zwischen dem Ort der Darstellung der Aufmerksamkeitsinformation und der Blickrichtung aus der Sicht des Fahrers, die dem zugrundeliegenden, von der Fahrerassistenzvorrichtung detektierten Objekt, etwa ein Fußgänger, vorliegt, entspricht; erfindungsgemäß liegt jedoch keine 1:1 Überdeckung vor, schon weil es sich bei der Aufmerksamkeitsinformation nicht um ein Bild handelt. Dies hat erfindungsgemäß den Vorteil, dass die Fahrerassistenzvorrichtung besonders leicht und kostengünstig herstellbar ist und darüber hinaus in einem Fahrzeug einen sehr geringen Bauraum benötigt, was weiterhin die Konstruktion des Fahrzeuges erleichtert und Kosten einspart.

Weiterhin ist erfindungsgemäß bevorzugt vorgesehen, dass der Fahrerassistenzvorrichtung eine Einrichtung zur Ermittlung der Kopfposition und/oder der Augenposition und/oder der Augenbewegung und/oder des Lidschlags des Fahrers zugeordnet ist und dass der Ort der Aufmerksamkeitsinformation und/oder der bildlichen Darstellung abhängig von der Kopfposition des Fahrers ist. Hierdurch wird erreicht, dass die Aufmerksamkeitsinformation bzw. die bildliche Darstellung besonders genau positioniert auf der Anzeigeeinrichtung, d.h. beispielsweise in dem Bereich der Frontscheibe, angezeigt wird und dass dadurch eine Informationsüberflutung des Fahrers effizient reduzierbar ist. Die Gefährdung des Benutzers durch Einschlafen ist dadurch in starkem Maße reduzierbar.

Ferner ist bevorzugt, dass die bildliche Darstellung der Darstellung von von einem Sensor der wenigstens zwei Sensoren gelieferten Daten entspricht oder dass die bildliche Darstellung einer Fusionsdarstellung von von den wenigstens zwei Sensoren gelieferten Daten entspricht. Hierdurch können die darzustellenden Informationen besonders einfach von einem Benutzer bzw. Fahrer erkannt und verarbeitet werden.

Weiterhin ist es erfindungsgemäß bevorzugt, dass die bildliche Darstellung eine Falschfarbendarstellung umfasst und wobei insbesondere die Falschfarbendarstellung von dem zweiten Sensor herrührt. Hierdurch ist vorteilhaft, dass eine Bildverbesserung durch die Falschfarbendarstellung möglich ist, indem beispielsweise ein Schwellwertverhalten, etwa mittels der Benutzung zweier Buntfarbendarstellungen, realisiert wird.

Ein weiterer Gegenstand der vorliegenden Erfindung ist ein Verfahren zur Sichtbarmachung der Umgebung eines Fahrzeugs, wobei wenigstens zwei Sensoren die Umgebung des Fahrzeugs zur Generierung einer Aufmerksamkeitsinformation sensieren, wobei eine erfindungsgemäße Fahrerassistenzvorrichtung verwendet wird. Hierdurch ist es vorteilhaft möglich, dass mit einfachen Mitteln ein großer Sicherheitsgewinn für den Fahrer erzielt wird.

Weiterhin wird die Aufgabe gemäß einer zweiten Ausführungsform der Erfindung von einer Fahrerassistenzvorrichtung für ein Fahrzeug gelöst, wobei der Fahrerassistenzvorrichtung eine Anzeigevorrichtung zugeordnet ist, wobei die Anzeigeeinrichtung im Bereich der Frontscheibe zur eingeschränkt kontaktanalogen Anzeige einer Aufmerksamkeitsinformation vorgesehen ist. Im Rahmen der vorliegenden Erfindung bedeutet der Begriff der kontaktanalogen Anzeige, dass eine Korrelation vorliegt, zwischen dem Ort der Anzeige und dem Ort auf der Windschutzscheibe bzw. der Frontscheibe, an welchem ein Fahrer des Fahrzeugs einen Bildausschnitt der Umgebung des Fahrzeugs sehen würde. Unter einer Aufmerksamkeitsinformation wird im Rahmen der vorliegenden Erfindung eine Darstellung verstanden, welche keine Bildinformationen im Sinne eines realen, beispielsweise von einer Kamera aufgenommenen, Bildes ist. Bei einer Aufmerksamkeitsinformation im Sinne der vorliegenden Erfindung kann es sich beispielsweise um eine Leuchtmarkierung, ein Leuchtpunkt bzw. ein Leuchtbalken oder auch eine cartoonartige Darstellung handeln. Eine solche Aufmerksamkeitsinformation wird erfindungsgemäß in eingeschränkt kontaktanaloger Anzeige im Bereich der Frontscheibe angezeigt. Dies bedeutet, dass eine gewisse räumliche Korrelation zwischen dem Ort der Darstellung der Aufmerksamkeitsinformation und der Blickrichtung aus der Sicht des Fahrers, die dem zugrundeliegenden, von der Fahrerassistenzvorrichtung detektierten Objekt, etwa ein Fußgänger, vorlegt, entspricht; erfindungsgemäß liegt jedoch keine 1:1 Überdeckung vor, schon weil es sich bei der Aufmerksamkeitsinformation nicht um ein Bild handelt. Dies hat erfindungsgemäß den Vorteil, dass die Fahrerassistenzvorrichtung besonders leicht und kostengünstig herstellbar ist und darüber hinaus in einem Fahrzeug einen sehr geringen Bauraum benötigt, was weiterhin die Konstruktion des Fahrzeuges erleichtert und Kosten einspart.

Bevorzugt ist, dass der Fahrerassistenzvorrichtung zwei Sensoren zur Sensierung der Umgebung des Fahrzeugs zugeordnet sind, wobei eine Fusionierung von von den zwei Sensoren gelieferten Daten zur Extraktion der Aufmerksamkeitsinformation vorgesehen ist. Hierdurch ist es erfindungsgemäß möglich, dass eine erheblich bessere Funktionsweise der Fahrerassistenzvorrichtung durch die Auswertung von zwei Sensoren ermöglicht wird.

Ferner ist bevorzugt, dass die Aufmerksamkeitsinformation eine in den Bereich der Frontscheibe projizierte Darstellung ist, insbesondere eine Leuchtmarkierung und/oder eine cartoonartige Darstellung. Hierdurch ist es in besonderer Weise vorteilhaft möglich, dass die Aufmerksamkeit des Fahrers in die richtige Richtung gelenkt wird und trotzdem keine Informationsüberflutung des Fahrers erfolgt, weil es sich bei der projizierten Darstellung nicht um eine realistische Wiedergabe bzw. ein realistisches Bild des Objekts handelt, auf dessen Vorhandensein bzw. dessen sicherheitskritische Entfernung zum Fahrzeug mittels der Aufmerksamkeitsinformation dargestellt werden soll.

Erfindungsgemäß ist weiterhin bevorzugt, dass die Aufmerksamkeitsinformation eine Leuchtmarkierung im Umfangsbereich der Frontscheibe ist. Hierdurch ist in besonders einfacher Weise und besonders kostengünstig eine Anzeigeeinrichtung realisierbar, wobei insbesondere der Randbereich der Darstellung bzw. der Randbereich der Frontscheibe, welche einer besonderen Aufmerksamkeit des Fahrers bedarf, besonders markiert wird.

Erfindungsgemäß ist weiterhin bevorzugt, dass die Anzeigeeinrichtung eine Kopf-Hoch-Anzeige (head up-Display) ist. Hierdurch kann eine Projektion der Aufmerksamkeitsinformation in den Bereich der Frontscheibe bzw. in einen Bereich vom Fahrer aus gesehen hinter der Frontscheibe (virtuelles Bild) möglich werden, so dass besonders genau lokalisiert die Aufmerksamkeitsinformation darstellbar ist.

Es ist erfindungsgemäß weiterhin bevorzugt, dass der Fahrerassistenzvorrichtung eine Einrichtung zur Ermittlung der Kopfposition und/oder der Augenposition und/oder der Augenbewegung und/oder des Lidschlags des Fahrers zugeordnet ist und dass der Ort der Aufmerksamkeitsinformation abhängig von der Kopfposition des Fahrers ist. Hierdurch wird erreicht, dass die Aufmerksamkeitsinformation besonders genau positioniert in dem Bereich der Frontscheibe angezeigt wird und dass dadurch eine Informationsüberflutung des Fahrers effizient reduzierbar ist. Die Gefährdung des Benutzers durch Einschlafen ist dadurch in starkem Maße reduzierbar.

Ferner ist bevorzugt, dass die Aufmerksamkeitsinformation eine Entfernungsinformation umfasst und/oder dass die wenigstens zwei Sensoren zur Sensierung in unterschiedlichen Spektralbereichen vorgesehen sind, insbesondere im Bereich des sichtbaren Lichts und/oder im fernen Infrarotbereich (FIR, far infrared) und/oder im nahen Infrarotbereich (NIR, near infrared). Hierdurch ist es einerseits möglich, dass dem Fahrer weitere wichtige und gegebenenfalls sicherheitsrelevante Informationen, insbesondere in Bezug auf die Entfernung von Objekten, zur Verfügung gestellt werden und dass weiterhin die Aufmerksamkeitsinformation auf der Grundlage einer besonders genauen und alle möglichen Informationskanäle bzw. Spektralbereiche auswertende Sensierung generiert wird. Ganz besonders bevorzugt ist der Einsatz der Fahrerassistenzvorrichtung bei Nacht, wo die Auswertung von Infrarotsignalen, etwa ausgesandt von neben der Fahrbahn sich bewegenden Fußgängern oder auch von Tieren, einen besonderen Gewinn an für den Fahrer in einer normalen Situation ohne Fahrerassistenzvorrichtung nicht zugänglichen Information bedeutet.

Weiterhin ist erfindungsgemäß bevorzugt, dass der Fahrerassistenzvorrichtung eine Zusatzanzeige zugeordnet ist, wobei die Zusatzanzeige zur Anzeige einer bildlichen Darstellung zumindest eines Teils der Umgebung des Fahrzeugs vorgesehen ist, bzw. es ist bevorzugt, dass die bildliche Darstellung einer Fusionsdarstellung von Signalen der zwei Sensoren entspricht, wobei insbesondere die Fusionsdarstellung eine Falschfarbendarstellung umfasst und wobei insbesondere die Falschfarbendarstellung von einem im Infrarotbereich, bevorzugt im langwelligen Infrarotbereich (FIR, far infrared), empfindlichen Sensor herrührt. Die Zusatzanzeige ist beispielsweise im Cockpit des Fahrzeugs - etwa an einer für ein Kombiinstrument üblichen Position - oder aber in der Mittelkonsole des Fahrzeugs angeordnet. Hierbei ist es bevorzugt so, dass einer der Sensoren bzw. Sensorsysteme als eine für sichtbares Licht empfindliche Kamera (bzw. Gruppe von Kameras) vorgesehen ist und eine höhere Auflösung aufweist als ein anderer der Sensoren bzw. Sensorsysteme, welcher insbesondere als Infrarotsensor mit einer (beispielsweise aus Kostengründen) geringeren Auflösung vorgesehen ist. Hierdurch ist es vorteilhaft möglich, dass mit vergleichsweise geringem Aufwand und Kosten ein maximaler Gewinn an für die Fahrerassistenzvorrichtung auswertbarer Information aus den Sensorsignalen gezogen werden kann. Insbesondere ist es vorteilhaft möglich, dass bei einer Falschfarbendarstellung insbesondere des Infrarotsensor-Signals eine bunte (also farbige) Darstellung der Sensorsignale erfolgt.

Ein weiterer Gegenstand der vorliegenden Erfindung betrifft ein Verfahren zur Sichtbarmachung der Umgebung eines Fahrzeugs, wobei wenigstens zwei Sensoren die Umgebung des Fahrzeugs zur Generierung einer Aufmerksamkeitsinformation sensieren, wobei eine Fusionierung von von den wenigstens zwei Sensoren gelieferten Daten erfolgt und wobei ferner mittels einer Anzeigeeinrichtung im Bereich der Frontscheibe die Aufmerksamkeitsinformation eingeschränkt kontaktanalog angezeigt wird. Hierdurch ist es vorteilhaft möglich, dass mit einfachen Mitteln ein großer Sicherheitsgewinn für den Fahrer erzielt wird.

Die Erfindung wird nachfolgend anhand von in der Zeichnung dargestellten Ausführungsbeispielen näher erläutert.
- **Figur 1**: zeigt schematisch die Anordnung einer erfindungsgemäßen Fahrerassistenzvorrichtung in einem Fahrzeug, wobei mehrere Möglichkeiten einer Anzeige einer Aufmerksamkeitsinformation bzw. einer darzustellenden Information angegeben sind und
- **Figur 2**: zeigt eine schematische Darstellung eines Fahrzeugs mit eingebauter Fahrerassistenzvorrichtung und einem vor dem Fahrzeug sich befindenden zu erkennenden Objekt.

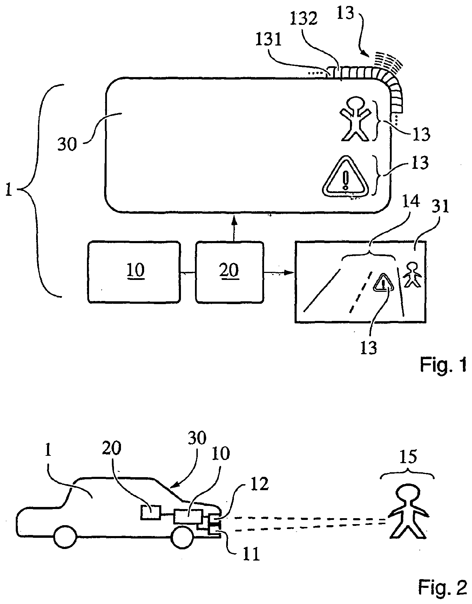

In **Figur 1** ist schematisch die Windschutzscheibe 30 bzw. die Frontscheibe 30 eines Fahrzeugs 1 dargestellt, wobei das Fahrzeug 1 eine erfindungsgemäße Fahrerassistenzvorrichtung 10 sowie eine Anzeigeeinrichtung 20 umfasst. Die Fahrerassistenzvorrichtung 10 erlaubt es, den Fahrer bei schlechter Sicht, Dunkelheit, Blendung bzw. sogar bei Nebel, zu entlasten.

Hierzu sind gemäß einer ersten Ausführungsform wenigstens zwei Sensoren 11, 12, die jeweils insbesondere eine Kamera bzw. Kamerasysteme umfassen, vorgesehen, die die Umgebung des Fahrzeugs 1 sensieren. Hierbei wird mittels eines ersten Sensors 11 ein Videobild der Umgebung des Fahrzeugs 1 generiert. Dieses bezieht sich insbesondere auf den sichtbaren Spektralbereich. Eine Bildverarbeitung (nicht dargestellt), die beispielsweise in der Fahrerassistenzvorrichtung 10 angeordnet oder auch nur der Fahrerassistenzvorrichtung 10 zugeordnet sein kann, analysiert optional das von dem ersten Sensor 11 bzw. dem zweiten Sensor 12 zur Verfügung gestellte Bild bzw. die von den Sensoren 11, 12 gelieferten Daten und markiert z.B. Menschen oder Tiere, um den Fahrer auf möglicherweise gefährliche Situationen frühzeitig hinzuweisen. Erfindungsgemäß kann es vorgesehen sein, dass die Signale der Sensoren 11, 12 zu einem Bild überlagert (fusioniert) werden. Hierbei ist es erfindungsgemäß besonders vorteilhaft vorgesehen, dass der erste Sensor 11 (bzw. erstes Sensorsystem 11) beispielsweise im sichtbaren und/oder im nahen infraroten Wellenlängenbereich empfindlich ist und dass der zweite Sensor 12 (bzw. das zweite Sensorsystem 12) im nahen und/oder fernen infraroten Wellenlängenbereich empfindlich ist (FIR, far infrared). Durch die Nutzung der Signale von beiden Sensoren 11, 12, die bevorzugt in verschiedenen Wellenlängenbereichen arbeiten, wird die Bildqualität des von der Umgebung des Fahrzeugs 1 aufgenommenen Bildes und die Funktionsvielfalt, welche im Vergleich zu einem System, welches lediglich eine Art von Sensor verwendet, erheblich verbessert. Die beiden Sensoren 11, 12 bzw. Sensorsysteme 11, 12 weisen erfindungsgemäß eine unterschiedliche Auflösung auf. Hierunter ist insbesondere zu verstehen, dass der Winkelbereich bzw. der Raumwinkelbereich, der einem Pixel des entsprechenden Sensors 11, 12 entspricht, unterschiedlich groß ist.

Gemäß einer zweiten Ausführungsform ist wenigstens ein Sensor, insbesondere eine Kamera, vorgesehen, der die Umgebung des Fahrzeugs 1 sensiert. Ganz besonders bevorzugt ist auch gemäß der zweiten Ausführungsform, dass wenigstens zwei Sensoren die Umgebung des Fahrzeugs 1 sensieren, wobei insbesondere mittels wenigstens einem der Sensoren ein Videobild der Umgebung des Fahrzeugs 1 generiert wird. Eine Bildverarbeitung analysiert das von dem Sensor (bzw. den Sensoren), welcher insbesondere eine Mehrzahl von Kameras umfassen kann, zur Verfügung gestellte Bild und markiert z.B. Menschen oder Tiere, um den Fahrer auf möglicherweise gefährliche Situationen frühzeitig hinzuweisen. Erfindungsgemäß ist es besonders bevorzugt, dass wenigstens zwei Sensoren bzw. zwei Sensorsysteme 11, 12 vorgesehen sind, deren Signale zu einem Bild überlagert (fusioniert) werden. Hierbei ist es erfindungsgemäß besonders vorteilhaft vorgesehen, dass der eine Sensor 11 (erster Sensor bzw. erstes Sensorsystem 11) beispielsweise im sichtbaren und im nahen infraroten Wellenlängenbereich empfindlich ist und dass der zweite Sensor 12 (bzw. das zweite Sensorsystem 12) im fernen infraroten Wellenlängenbereich empfindlich ist (FIR, far infrared). Durch die vorteilhafte Überlagerung der Signale von wenigstens zwei Sensoren, die bevorzugt in verschiedenen Wellenlängenbereichen arbeiten, wird die Bildqualität des von der Umgebung des Fahrzeugs 1 aufgenommenen Bildes und die Funktionsvielfalt, welche im Vergleich zu einem System, welches lediglich eine Art von Sensor verwendet, erheblich verbessert.

Erfindungsgemäß ist es bei beiden Ausführungsformen vorgesehen, dass die Fahrerassistenzvorrichtung 10 mit einer Anzeigeeinrichtung 20 verbunden ist bzw. dass die Anzeigeeinrichtung 20 mit der Fahrerassistenzvorrichtung 10 verbunden ist bzw. ihr zugeordnet ist. Mittels der Anzeigeeinrichtung 20 ist es nun erfindungsgemäß möglich, sogenannte Aufmerksamkeitsinformationen 13 bzw. eine einzige Aufmerksamkeitsinformation 13 und/oder eine bildliche Darstellung 14 anzuzeigen, insbesondere auf oder in der Frontscheibe 30 anzuzeigen. Bei einer solchen Aufmerksamkeitsinformation 13 handelt es sich erfindungsgemäß nicht um ein realistisches Bild bzw. um einen realistischen Bildausschnitt (im Gegensatz zur bildlichen Darstellung) des von den Sensoren 11, 12 ermittelten bzw. gesehenen Bildes der Umgebung des Fahrzeugs 1, sondern um Piktogramme bzw. cartoonartige Darstellung oder auch lediglich um eine Leuchtmarkierung wie etwa einen Leuchtbalken oder einen Leuchtpunkt, welcher im Bereich der Frontscheibe 30 des Fahrzeugs 1 dargestellt wird. Hierbei kann die Anzeigeeinrichtung 20 beispielsweise als eine Punktlichtquelle vorgesehen, beispielsweise ein Laser, dessen Lichtstrahl beispielsweise durch einen Scanner an die entsprechende Position auf der Windschutzscheibe bzw. der Frontscheibe 30 oder an einen anderen Ort wie beispielsweise das Cockpit oder die Mittelkonsole gelenkt wird und somit einen Bereich, insbesondere auf der Frontscheibe 30, markieren kann.

Dies kann unter Berücksichtigung der Kopfposition des Fahrers geschehen, die mit einer Kamera bzw. einer Einrichtung zur Ermittlung der Kopfposition des Fahrers ermittelbar ist. Hierzu ist der Anzeigeeinrichtung 20 eine solche Kamera bzw. eine solche Einrichtung (nicht dargestellt) zur Ermittlung der Kopfposition des Fahrers zugeordnet, so dass die genaue Position des Bildes der Punktlichtquelle bzw. die genaue Position des Piktogramms oder der Darstellung der Aufmerksamkeitsinformation 13 und/oder der bildlichen Darstellung 14 auf der Anzeigeeinrichtung 20 und/oder auf der Frontscheibe 30 des Fahrzeugs 1 angepasst wird. Eine solche Einrichtung zur Ermittlung der Kopfposition des Fahrers kann beispielsweise als eine einfache, niedrig auflösende Kamera als Bestandteil des Projektionskombiinstrumentes ausgebildet sein, welche zur Anpassung des Sichtfeldes vorgesehen ist. Als alternative oder kumulativ vorhandene Ausführung einer erfindungsgemäßen Anzeigeeinrichtung 20 zur Darstellung einer Aufmerksamkeitsinformation 13 im Bereich der Frontscheibe 30 kann es vorgesehen sein, dass ein Lichtband, bestehend aus vielen einzelnen ansteuerbaren Punktlichtquellen am Rand der Windschutzscheibe umlaufend vorgesehen ist. Durch die geeignete Aktivierung von einzelnen solchen Punktlichtquellen kann die Aufmerksamkeit des Fahrers auf einen Bereich der Windschutzscheibe bzw. der Frontscheibe 30 gelenkt werden, indem der Fahrer das erkannte Objekt sehen sollte.

Weiterhin ist in Figur 1 eine Zusatzanzeige 31 bzw. eine weitere Möglichkeit 31 einer Anzeigeeinrichtung 20 oder eines Teils davon dargestellt, auf welcher eine Aufmerksamkeitsinformation 13 und/oder eine bildliche Darstellung 14 zumindest eines Teils der Umgebung des Fahrzeugs 1 abgebildet sein kann. Die Zusatzanzeige 31 ist optional vorgesehen. Auf der Zusatzanzeige 31 (bzw. weitere Möglichkeit 31 einer Anzeigevorrichtung 20) können entweder (wie auf der Frontscheibe 30) Aufmerksamkeitsinformationen 13 angezeigt werden. Alternativ dazu können (insbesondere gemäß der ersten Ausführungsform) auf der Zusatzanzeige 31 zusätzlich zu der Aufmerksamkeitsinformation 13 auch die bildliche Darstellung 14 abgebildet werden, wobei diese insbesondere als Fusionsdarstellung beruhend auf Signalen des ersten Sensors 11 oder Sensorsystems und auf Signalen des zweiten Sensors 11 oder Sensorsystems vorgesehen ist. Hierbei kommt es erfindungsgemäß insbesondere bei der Darstellung der Signale des Infrarot-Sensors (zweiter Sensor 12) zu einer Falschfarbendarstellung in einer oder mehreren bunten Farbe(n) (also nicht schwarz-weiß) - beispiels weise blau und gelb - je nach Intensität des vom zweiten Sensor 12 bereitgestellten Signals. Hierbei ist es durch die Verwendung von in diesem Beispiel zwei Buntfarben möglich, unterschiedliche Temperaturbereiche (welche unterschiedlichen Intensitäten des vom zweiten Sensor 12 empfangenen Signals entsprechen) unterschiedlich in der Darstellung auf der Anzeigeeinrichtung 20 darzustellen. Zwischen diesen beiden Temperaturbereichen bzw. Intensitätsbereichen ergibt sich daher ein Schwellwertverhalten. Hierdurch ist es möglich, besonders interessierende Temperaturbereiche mittels einer besonders augenfälligen Farbdarstellung zu kennzeichnen.

In **Figur 1** sind drei unterschiedliche Möglichkeiten einer Aufmerksamkeitsinformation 13 auf oder am Rande der Windschutzscheibe bzw. Frontscheibe 30 beispielhaft auch für die weitere Möglichkeit 31 bzw. Anordnung 31 der Anzeigeeinrichtung 20 dargestellt. Im oberen rechten Bereich der Frontscheibe 30 ist an dessen äußeren Rand bzw. im Umfangsbereich des Randes der Frontscheibe 30 die Aufmerksamkeitsinformation 13 anhand von blinkenden oder allgemein beleuchteten Bereichen eines Leuchtbandes dargestellt. Hierbei sind eine Mehrzahl von Leuchtelementen 131, 132 (beispielsweise mittels LED beleuchtet) dargestellt, wovon lediglich ein Teil beleuchtet ist. Der beleuchtete Teil der Leuchtelemente 131, 132 gibt den Ort bzw. den Sektor der Windschutzscheibe 30 an, an dem sich das Objekt befindet, welches die Sensoren 11, 12 bzw. die Auswertung innerhalb der Fahrerassistenzvorrichtung 10 als sicherheitsrelevant bzw. sicherheitskritisch einstufen, so dass die Anzeige im Bereich der Windschutzscheibe bzw. im Bereich der Frontscheibe 30 gemäß der Erfindung erfolgt. Eine weitere Möglichkeit einer Aufmerksamkeitsinformation 13 besteht in der Darstellung von cartoonartigen Bildern bzw. Piktogrammen, wobei beispielsweise angezeigt werden kann, ob das System einen Fußgänger erkannt zu haben glaubt oder eine sonstige Gefahr erkannt zu haben glaubt. Beispielsweise kann im Falle eines erkannten Fußgängers ein Piktogramm eines Fußgängers bzw. eines Männchens dargestellt werden und im Fall einer nichtzuordenbaren Gefahr bzw. sicherheitskritischen Situation ein entsprechendes Verkehrsschild bzw. ein Piktogramm eines Verkehrsschildes dargestellt werden. Alternativ dazu ist es auch möglich, dass als Aufmerksamkeitsinformation 13 lediglich ein Leuchtpunkt (nicht dargestellt), ein runder beleuchteter Bereich oder ein sonstiger etwa rechteckig oder dreieckig oder sonst wie geformter Bereich, der die Frontscheibe 30 (oder alternativ auch die weitere Möglichkeit 31 einer Anzeigeeinrichtung 20) beleuchtet, dargestellt ist. Ein solcher Bereich kann beispielsweise mittels eines Ablenkscanners als Anzeigeeinrichtung 20 dargestellt werden.

In **Figur 2** ist schematisch der Aufbau der Fahrerassistenzvorrichtung 10 bzw. deren Anordnung in einem Fahrzeug 1 dargestellt. Die Fahrerassistenzvorrichtung 10 ist mit den Sensoren 11, 12 verbunden bzw. es sind die Sensoren 11, 12 der Fahrerassistenzvorrichtung 10 zugeordnet. Weiterhin ist die Anzeigeeinrichtung 20 der Fahrerassistenzvorrichtung 10 zugeordnet, so dass eine Anzeige der Aufmerksamkeitsinformation 13 auf der Frontscheibe 30 des Fahrzeugs 1 erfolgen kann oder dass eine Anzeige der Aufmerksamkeitsinformation 13 und/oder der bildlichen Darstellung 14 erfolgen kann. Im Falle, dass ein Objekt 15, etwa ein Fußgänger, von den Sensoren 11, 12 bzw. von der Auswertesoftware, welche den Sensoren 11, 12 bzw. der Fahrerassistenzvorrichtung 10 zugeordnet ist, detektiert wird, wird ein entsprechendes Signal von der Fahrerassistenzvorrichtung 10 zu der Anzeigeeinrichtung 20 gesandt, um die Aufmerksamkeitsinformation 13 und/oder der bildlichen Darstellung 14, wie im Zusammenhang mit der **Figur 1** erklärt, darzustellen. Hierzu ist es zum einen möglich, dass lediglich eine Art einer Aufmerksamkeitsinformation 13 zur Anzeige, insbesondere auf der Frontscheibe 30, gelangen kann oder es ist möglich, dass sowohl ein Piktogramm bzw. eine cartoonartige Darstellung als Aufmerksamkeitsinformation 13 und zusätzlich noch eine Leuchtmarkierung - etwa im Umfangsbereich der Frontscheibe 30 - als Aufmerksamkeitsinformation 13 angezeigt wird. Erfindungsgemäß kann es vorgesehen sein, dass eine Objekterkennung, beispielsweise von Fußgängern oder von anderen Fahrzeugen, durchgeführt wird und beim Erkennen eines Objekts eine entsprechende Anzeige auf der Anzeigeeinrichtung 20 oder der Zusatzanzeige 31 erfolgt. Hierbei basiert die Objekterkennung entweder auf dem Signal eines Infrarot-Sensors (oder einer IR-Kamera) oder auf dem Signal eines im sichtbaren Spektralbereich des Lichts empfindlichen Sensors oder aber auf den Signalen von beiden Sensoren (wobei insbesondere eine Fusion der Sensordaten vorgenommen wird). Weitere Informationen, die bei der Objekterkennung für eine Voraussage hinsichtlich des Gefährdungspotentials von in der Umgebung des Fahrzeugs befindlicher Objekte herangezogen werden können sind: die Daten eines im Fahrzeug angeordneten Navigationssystems und/oder die Daten eines im Fahrzeug angeordneten Bordcomputers und/oder eine Information über den Lenkwinkel und/oder eine Information über den Aktivitätszustand eines Blinkers und/oder eine Information über eine Aktivität eines ABS-Systems (Antiblockiersystem) und/oder eine Information über eine Gierrate des Fahrzeugs und/oder eine Information über die Geschwindigkeit des Fahrzeugs.

Bevorzugt ist erfindungsgemäß vorgesehen, dass die Sensoren 11, 12 und gegebenenfalls eine aktive Infrarotbeleuchtung (insbesondere im nahen Infrarotbereich) in oder an der Dachkonsole, in oder an der Windschutzscheibe bzw. in oder an dem Rückspiegel des Fahrzeugs angebracht sind. In diesem Falle ist das Material der Windschutzscheibe, beispielsweise Glas oder Kunststoff, zumindest in dem Bereich, in dem eine Transmission der Strahlung (insbesondere Infrarotstrahlung) erforderlich ist, entsprechend durchlässig zu gestalten. Gegebenenfalls ist in diesem Fall für vergleichsweise intensive Lichteinstrahlung (etwa bei Tageslicht) ein Schutz des Sensors (beispielsweise eine mittels eines Helligkeitssignals getrennte Blende) vorzusehen.

Ausführungsvarianten:
1. Fahrerassistenzvorrichtung (10) für ein Fahrzeug (1), dadurch gekennzeichnet, dass der Fahrerassistenzvorrichtung (10) wenigstens zwei Sensoren (11, 12) zur Sensierung der Umgebung des Fahrzeugs (1) zugeordnet sind, wobei die Sensoren (11, 12) eine unterschiedliche Auflösung aufweisen.
2. Fahrerassistenzvorrichtung (10) nach Ausführungsvariante 1, dadurch gekennzeichnet, dass die wenigstens zwei Sensoren (11, 12) zur Sensierung in unterschiedlichen Spektralbereichen vorgesehen sind.
3. Fahrerassistenzvorrichtung (10) nach einem der vorhergehenden Ausführungsvarianten, dadurch gekennzeichnet, dass der erste Sensor (11) zur Sensierung im Bereich des sichtbaren Lichts vorgesehen ist und dass der zweite Sensor (12) zur Sensierung im Bereich des infraroten Lichts, bevorzugt im Bereich des fernen Infrarotbereich (FIR, far infrared), vorgesehen ist.
4. Fahrerassistenzvorrichtung (10) nach einem der vorhergehenden Ausführungsvarianten, dadurch gekennzeichnet, dass der zweite Sensor (12) eine geringere Auflösung aufweist als der erste Sensor (11), wobei die Sensoren insbesondere in oder an der Dachkonsole, in oder an der Windschutzscheibe oder in oder an dem Rückspiegel des Fahrzeugs (1) vorgesehen sind.
5. Fahrerassistenzvorrichtung (10) nach einem der vorhergehenden Ausführungsvarianten, dadurch gekennzeichnet, dass der Fahrerassistenzvorrichtung (10) eine Anzeigeeinrichtung (20) zugeordnet ist.
6. Fahrerassistenzvorrichtung (10) nach einem der vorhergehenden Ausführungsvarianten, dadurch gekennzeichnet, dass die Anzeigeeinrichtung (20) im Bereich der Frontscheibe (30) und/oder im Bereich des Cockpits des Fahrzeugs (1) und/oder im Bereich der Mittelkonsole des Fahrzeugs (1) vorgesehen ist.
7. Fahrerassistenzvorrichtung (10) nach einem der vorhergehenden Ausführungsvarianten, dadurch gekennzeichnet, dass im Bereich der Frontscheibe (30) die Anzeigeeinrichtung (20) eine Kopf-hoch-Anzeige (Head-up-Display) ist.
8. Fahrerassistenzvorrichtung (10) nach einem der vorhergehenden Ausführungsvarianten, dadurch gekennzeichnet, dass die Anzeigeeinrichtung (20) zur Anzeige einer Aufmerksamkeitsinformation (13) und/oder zur Anzeige einer bildlichen Darstellung (41) zumindest eines Teils der Umgebung des Fahrzeugs (1) vorgesehen ist.
9. Fahrerassistenzvorrichtung (10) nach einem der vorhergehenden Ausführungsvarianten, dadurch gekennzeichnet, dass zur Extraktion der Aufmerksamkeitsinformation (13) eine Verarbeitung von von einem Sensor (11, 12) der wenigstens zwei Sensoren (11, 12) gelieferten Daten vorgesehen ist oder dass zur Extraktion der Aufmerksamkeitsinformation (13) eine Fusionierung von von den wenigstens zwei Sensoren (11, 12) gelieferten Daten vorgesehen ist.
10. Fahrerassistenzvorrichtung (10) nach einem der vorhergehenden Ausführungsvarianten, dadurch gekennzeichnet, dass die Aufmerksamkeitsinformation (13) eine Leuchtmarkierung und/oder eine cartoonartige Darstellung ist.
11. Fahrerassistenzvorrichtung (10) nach einem der vorhergehenden Ausführungsvarianten, dadurch gekennzeichnet, dass die Aufmerksamkeitsinformation (13) eine Entfernungsinformation umfasst.
12. Fahrerassistenzvorrichtung (10) nach einem der vorhergehenden Ausführungsvarianten, dadurch gekennzeichnet, dass die Darstellung der Aufmerksamkeitsinformation (13) im Bereich der Frontscheibe (30) eingeschränkt kontaktanalog vorgesehen ist.
13. Fahrerassistenzvorrichtung (10) nach einem der vorhergehenden Ausführungsvarianten, dadurch gekennzeichnet, dass die Aufmerksamkeitsinformation (13) eine Leuchtmarkierung im Umfangsbereich der Frontscheibe (30) ist.
14. Fahrerassistenzvorrichtung (10) nach einem der vorhergehenden Ausführungsvarianten, dadurch gekennzeichnet, dass der Fahrerassistenzvorrichtung (10) eine Einrichtung zur Ermittlung der Kopfposition des Fahrers zugeordnet ist und dass der Ort der Aufmerksamkeitsinformation (13) und/oder der bildlichen Darstellung (41) abhängig von der Kopfposition des Fahrers ist.
15. Fahrerassistenzvorrichtung (10) nach einem der vorhergehenden Ausführungsvarianten, dadurch gekennzeichnet, dass die bildliche Darstellung (41) der Darstellung von von einem Sensor (11, 12) der wenigstens zwei Sensoren (11, 12) gelieferten Daten entspricht oder dass die bildliche Darstellung (41) einer Fusionsdarstellung von von den wenigstens zwei Sensoren (11, 12) gelieferten Daten entspricht.
16. Fahrerassistenzvorrichtung (10) nach einem der vorhergehenden Ausführungsvarianten, dadurch gekennzeichnet, dass die bildliche Darstellung (41) eine Falschfarbendarstellung umfasst und wobei insbesondere die Falschfarbendarstellung von dem zweiten Sensor (12) herrührt.
17. Verfahren zur Sichtbarmachung der Umgebung eines Fahrzeugs (1), wobei wenigstens zwei Sensoren (11, 12) die Umgebung des Fahrzeugs (1) zur Generierung einer Aufmerksamkeitsinformation (13) sensieren, dadurch gekennzeichnet, dass eine Fahrerassistenzvorrichtung (10) gemäß einem der vorhergehenden Ausführungsvarianten verwendet wird.
18. Fahrerassistenzvorrichtung (10) für ein Fahrzeug (1), dadurch gekennzeichnet, dass der Fahrerassistenzvorrichtung (10) eine Anzeigeeinrichtung (20) zugeordnet ist, wobei die Anzeigeeinrichtung (20) im Bereich der Frontscheibe (30) zur eingeschränkt kontaktanalogen Anzeige einer Aufmerksamkeitsinformation (13) vorgesehen ist.
19. Fahrerassistenzvorrichtung (10) nach Ausführungvariante 18, dadurch gekennzeichnet, dass der Fahrerassistenzvorrichtung (10) zwei Sensoren (11, 12) zur Sensierung der Umgebung des Fahrzeugs (1) zugeordnet sind, wobei eine Fusionierung von von den wenigstens zwei Sensoren (11, 12) gelieferten Daten zur Extraktion der Aufmerksamkeitsinformation vorgesehen ist.
20. Fahrerassistenzvorrichtung (10) nach einem der Ausführungsvarianten 18 bis 19, dadurch gekennzeichnet, dass die Aufmerksamkeitsinformation (13) eine in den Bereich der Frontscheibe (30) projizierte Darstellung ist, insbesondere eine Leuchtmarkierung und/oder eine cartoonartige Darstellung.
21. Fahrerassistenzvorrichtung (10) nach einem der Ausführungsvarianten 18 bis 20, dadurch gekennzeichnet, dass die Aufmerksamkeitsinformation (13) eine Leuchtmarkierung im Umfangsbereich der Frontscheibe (30) ist.
22. Fahrerassistenzvorrichtung (10) nach einem der Ausführungsvarianten 18 bis 21, dadurch gekennzeichnet, dass die Anzeigeeinrichtung (20) eine Kopf-hoch-Anzeige (Head-up-Display) ist.
23. Fahrerassistenzvorrichtung (10) nach einem der Ausführungsvarianten 18 bis 22, dadurch gekennzeichnet, dass der Fahrerassistenzvorrichtung (10) eine Einrichtung zur Ermittlung der Kopfposition des Fahrers zugeordnet ist und dass der Ort der Aufmerksamkeitsinformation (13) abhängig von der Kopfposition des Fahrers ist.
24. Fahrerassistenzvorrichtung (10) nach einem der Ausführungsvarianten 18 bis 23, dadurch gekennzeichnet, dass die Aufmerksamkeitsinformation (13) eine Entfernungsinformation umfasst.
25. Fahrerassistenzvorrichtung (10) nach einem der Ausführungsvarianten 18 bis 24, dadurch gekennzeichnet, dass die wenigstens zwei Sensoren (11, 12) zur Sensierung in unterschiedlichen Spektralbereichen vorgesehen sind, insbesondere im Bereich des sichtbaren Lichts und/oder im fernen Infrarotbereich (FIR, far infrared) und/oder im nahen Infrarotbereich (NIR, near infrared).
26. Fahrerassistenzvorrichtung (10) nach einem der Ausführungsvarianten 18 bis 25, dadurch gekennzeichnet, dass der Fahrerassistenzvorrichtung (10) eine Zusatzanzeige (31) zugeordnet ist, wobei die Zusatzanzeige (31) zur Anzeige einer bildlichen Darstellung (41) zumindest eines Teils der Umgebung des Fahrzeugs (1) vorgesehen ist.
27. Fahrerassistenzvorrichtung (10) nach einem der Ausführungsvarianten 18 bis 26, dadurch gekennzeichnet, dass die bildliche Darstellung (41) einer Fusionsdarstellung von Signalen der zwei Sensoren (11, 12) entspricht, wobei insbesondere die Fusionsdarstellung eine Falschfarbendarstellung umfasst und wobei insbesondere die Falschfarbendarstellung von einem im Infrarotbereich, bevorzugt im langwelligen Infrarotbereich (FIR, far infrared), empfindlichen Sensor herrührt, wobei insbesondere die Sensoren (11, 12) eine unterschiedliche Auflösung aufweisen.
28. Verfahren zur Sichtbarmachung der Umgebung eines Fahrzeugs (1), wobei wenigstens zwei Sensoren (11, 12) die Umgebung des Fahrzeugs (1) zur Generierung einer Aufmerksamkeitsinformation (13) sensieren, wobei eine Fusionierung von von den wenigstens zwei Sensoren (11, 12) gelieferten Daten erfolgt, dadurch gekennzeichnet, dass mittels einer Anzeigeeinrichtung (20) im Bereich der Frontscheibe (30) die Aufmerksamkeitsinformation (13) eingeschränkt kontaktanalog angezeigt wird.

### Bezugszeichenliste

- 1: Fahrzeug
- 10: Fahrerassistenzvorrichtung
- 11: Erster Sensor / erstes Sensorsystem
- 12: zweiter Sensor / zweites Sensorsystem
- 13: Aufmerksam keitsinformation
- 14: bildliche Darstellung
- 15: Objekt
- 20: Anzeigeeinrichtung
- 30: Frontscheibe
- 31: Zusatzanzeige / weitere Möglichkeit einer Anzeigeeinrichtung
- 131, 132: Leuchtelemente

## Patentansprüche

1. Fahrerassistenzvorrichtung (10) für ein Fahrzeug (1), **dadurch gekennzeichnet, dass** der Fahrerassistenzvorrichtung (10) wenigstens zwei Sensoren (11, 12) zur Sensierung der Umgebung des Fahrzeugs (1) zugeordnet sind, wobei die Sensoren (11, 12) eine unterschiedliche Auflösung aufweisen.

2. Fahrerassistenzvorrichtung (10) nach Anspruch 1, **dadurch gekennzeichnet, dass** die wenigstens zwei Sensoren (11, 12) zur Sensierung in unterschiedlichen Spektralbereichen vorgesehen sind.

3. Fahrerassistenzvorrichtung (10) nach einem der vorhergehenden Ansprüche, **dadurch gekennzeichnet, dass** der erste Sensor (11) zur Sensierung im Bereich des sichtbaren Lichts vorgesehen ist und dass der zweite Sensor (12) zur Sensierung im Bereich des infraroten Lichts, bevorzugt im Bereich des fernen Infrarotbereich (FIR, far infrared), vorgesehen ist.

4. Fahrerassistenzvorrichtung (10) nach einem der vorhergehenden Ansprüche, **dadurch gekennzeichnet, dass** der zweite Sensor (12) eine geringere Auflösung aufweist als der erste Sensor (11), wobei die Sensoren insbesondere in oder an der Dachkonsole, in oder an der Windschutzscheibe oder in oder an dem Rückspiegel des Fahrzeugs (1) vorgesehen sind.

5. Fahrerassistenzvorrichtung (10) nach einem der vorhergehenden Ansprüche, **dadurch gekennzeichnet, dass** der Fahrerassistenzvorrichtung (10) eine Anzeigeeinrichtung (20) zugeordnet ist.

6. Fahrerassistenzvorrichtung (10) nach einem der vorhergehenden Ansprüche, **dadurch gekennzeichnet, dass** die Anzeigeeinrichtung (20) im Bereich der Frontscheibe (30) und/oder im Bereich des Cockpits des Fahrzeugs (1) und/oder im Bereich der Mittelkonsole des Fahrzeugs (1) vorgesehen ist.

7. Fahrerassistenzvorrichtung (10) nach einem der vorhergehenden Ansprüche, **dadurch gekennzeichnet, dass** im Bereich der Frontscheibe (30) die Anzeigeeinrichtung (20) eine Kopf-hoch-Anzeige (Head-up-Display) ist.

8. Fahrerassistenzvorrichtung (10) nach einem der vorhergehenden Ansprüche, **dadurch gekennzeichnet, dass** die Anzeigeeinrichtung (20) zur Anzeige einer Aufmerksamkeitsinformation (13) und/oder zur Anzeige einer bildlichen Darstellung (41) zumindest eines Teils der Umgebung des Fahrzeugs (1) vorgesehen ist.

9. Fahrerassistenzvorrichtung (10) nach einem der vorhergehenden Ansprüche, **dadurch gekennzeichnet, dass** zur Extraktion der Aufmerksamkeitsinformation (13) eine Verarbeitung von von einem Sensor (11, 12) der wenigstens zwei Sensoren (11, 12) gelieferten Daten vorgesehen ist oder dass zur Extraktion der Aufmerksamkeitsinformation (13) eine Fusionierung von von den wenigstens zwei Sensoren (11, 12) gelieferten Daten vorgesehen ist.

10. Fahrerassistenzvorrichtung (10) nach einem der vorhergehenden Ansprüche, **dadurch gekennzeichnet, dass** die Aufmerksamkeitsinformation (13) eine Leuchtmarkierung und/oder eine cartoonartige Darstellung ist.

11. Fahrerassistenzvorrichtung (10) nach einem der vorhergehenden Ansprüche, **dadurch gekennzeichnet, dass** die Aufmerksamkeitsinformation (13) eine Entfernungsinformation umfasst.

12. Fahrerassistenzvorrichtung (10) nach einem der vorhergehenden Ansprüche, **dadurch gekennzeichnet, dass** die Darstellung der Aufmerksamkeitsinformation (13) im Bereich der Frontscheibe (30) eingeschränkt kontaktanalog vorgesehen ist.

13. Verfahren zur Sichtbarmachung der Umgebung eines Fahrzeugs (1), wobei wenigstens zwei Sensoren (11, 12) die Umgebung des Fahrzeugs (1) zur Generierung einer Aufmerksamkeitsinformation (13) sensieren, **dadurch gekennzeichnet, dass** eine Fahrerassistenzvorrichtung (10) gemäß einem der vorhergehenden Ansprüchen verwendet wird.

14. Fahrerassistenzvorrichtung (10) für ein Fahrzeug (1), **dadurch gekennzeichnet, dass** der Fahrerassistenzvorrichtung (10) eine Anzeigeeinrichtung (20) zugeordnet ist, wobei die Anzeigeeinrichtung (20) im Bereich der Frontscheibe (30) zur eingeschränkt kontaktanalogen Anzeige einer Aufmerksamkeitsinformation (13) vorgesehen ist.

15. Verfahren zur Sichtbarmachung der Umgebung eines Fahrzeugs (1), wobei wenigstens zwei Sensoren (11, 12) die Umgebung des Fahrzeugs (1) zur Generierung einer Aufmerksamkeitsinformation (13) sensieren, wobei eine Fusionierung von von den wenigstens zwei Sensoren (11, 12) gelieferten Daten erfolgt, **dadurch gekennzeichnet, dass** mittels einer Anzeigeeinrichtung (20) im Bereich der Frontscheibe (30) die Aufmerksamkeitsinformation (13) eingeschränkt kontaktanalog angezeigt wird.
